# EUROPEAN PATENT APPLICATION

(11) **EP 2 479 956 A1**
(43) Date of publication of application: **25.07.2012**
(21) Application number: 11305046.2
(22) Date of filing: 17.01.2011
(51) Int. Cl.: H04L 29/06, H04W 4/14, H04L 12/58

(54) **Method of optimizing a text massage communication between a server and a secure element**

(71) Applicant: Gemalto SA, 92190 Meudon (FR)
(72) Inventor: Webb, Ronaldo, Singapore 630354 (SG); Daruca, Olga, Singapore 270006 (SG); Alfadian, Pascal, Singapore 140024 (SG)

(57) **Abstract**

The invention is a method for managing the communication between a server and a secure element connected to a telecom equipment. The method comprises the steps of:
- providing the server with an identifier of a character set and with an initial text message,
- generating a first text message into the server by encoding a first part of the initial text message thanks to the character set,
- if the character set is a 16-bit character alphabet, checking that the first text message does not contain any character specific to 16-bit character alphabet,
- in case of successful checking, generating an optimized text message into the server by encoding the first text message thanks to a 7-bit character alphabet or thanks to a 8-bit character alphabet, and
- sending the optimized text message to the secure element.

## Description

### (Field of the invention)

The present invention relates to methods of managing communication between a server and a secure element. It relates particularly to methods for optimizing the size of text messages which are exchanged between a server and a secure element.

### (Background of the invention)

Secure elements (also named secure tokens) are small machines comprising a memory, a microprocessor and also an operating system for computing treatments. Secure elements are intended to connect - either in contact or contactless mode - a host device which may provides power and a user interface. In general, secure elements comprise a plurality of memories of different types. For example, they may comprise memory of RAM, ROM, EEPROM or Flash type. Secure elements have limited computing resources. For example, smart cards are secure elements. A secure element may comprise a NFC application. Secure elements may provide several services like crypto services, SIM features, or any applications which may be embedded in a smart card for example.

More and more text messages are exchanged through portable devices like mobile phones. In particular, instant messaging systems are now deployed on a large number of mobile phones. Instant messaging systems generate many text messages which are sent and received by users through their mobile phones. These text messages are conveyed through protocol like the short messaging service (usually named SMS). In this case the text messages emitted by an instant messaging server are forwarded by the mobile phone to the SIM (Subscriber Identity Module) card. A text message is made of a set of characters. These characters are coded according to a character set. (i.e. character alphabet)

According to current Telecom standards, the characters of SMS messages may be encoded using one of the three following character sets: 7-bit character (which corresponds to the default GSM character set), 8-bit character and 16-bit character. The 16-bit character coding corresponds to the UCS-2 (2-byte Universal Character Set) character set or UTF-16 (16-bit Unicode Transformation Format).

The default GSM character set (for SMS) is defined in ETSI GSM 03.038. Since the payload of short message of SMS type is 140 bytes, such a payload may contain either 160 7-bit characters (default GSM alphabet), 140 8-bit characters or 70 16-bits characters (UCS-2 alphabet). A single character set is used for generating all messages targeting a user. This single character set is selected according to the used configuration.

The exchanged text messages may be numerous and may require a large bandwidth. There is a need for optimizing the used bandwidth when conveying text messages.

### (Summary of the Invention)

An object of the invention is to solve the above mentioned technical problem.

The object of the present invention is a method for managing the communication between a server and a secure element which is connected to a telecom equipment. The method comprises the steps of:
- providing the server with an identifier of a preset character set,
- providing the server with an initial text message,
- generating a first text message into the server by encoding a first part of the initial text message thanks to the preset character set,
- if the preset character set is a 16-bit character alphabet, checking that the first text message does not contain any character specific to 16-bit character alphabet,
- in case of successful checking, generating an optimized text message into the server by encoding the first text message thanks to a 7-bit character alphabet or thanks to a 8-bit character alphabet, and
- sending the optimized text message to the secure element.

Note that the first part of the initial text message may correspond to either a subset of the initial text message or to the whole initial text message.

In a preferred embodiment, the 7-bit character alphabet may be the default GSM character set.

Advantageously, the method may comprise the further steps of:
- receiving first and second messages by said secure element,
- checking if said first and second messages are encoded thanks to different character sets,
- in case of successful checking, identifying a narrow message encoded thanks to either a 7-bit character alphabet or a 8-bit character alphabet and re-encoding the narrow message thanks to the 16-bit character alphabet.

The method may also comprise the steps of:
- generating a second text message into the server by encoding a second part of the initial text message thanks to the preset character set,
- checking if said first and second messages are encoded thanks to a single character set,
- in case of successful checking, merging said first and second messages for generating a third message.

Advantageously, the server may be an instant messaging gateway, the optimized text message may comprise a text related to instant messaging and the optimized text message may comply with the SMS specifications.

The step of providing the server with an identifier of the preset character set may be performed during a sign-in operation.

Another object of the invention is a secure element that is intended to be connected to a telecom equipment. The secure element is capable of receiving first and second messages and comprises a means able to check if said first and second messages are encoded thanks to different character sets. The means is capable of identifying a narrow message which is encoded thanks to a 7-bit or 8-bit character alphabet. The means is capable of generating a new message by re-encoding the narrow message thanks to a 16-bit character alphabet.

Advantageously, the 7-bit character alphabet may be the default GSM character set.

The means may be able to check the size of the new message and may be able to split the new message into portions having a size lower than 71 bytes.

Another object of the invention is a system comprising a server and a secure element as described above. The server comprises a second means which is capable of checking that all characters of a text message are coded thanks to the default GSM character set. The second means is capable of generating an optimized text message by encoding the generated text message thanks to the default GSM character set.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts an example of an instant messaging system comprising a server and a secure element according to the invention,
- Figure 2 depicts schematically a first example of the method of managing communication between a server and a SIM card according to the invention;
- Figure 3 depicts schematically another example of the method of managing communication between a server and a SIM card according to the invention;
- Figure 4 is a first example of message encoding according to the invention,
- Figure 5 is a second example of message encoding according to the invention,
- Figure 6 is a third example of message encoding according to the invention, and
- Figure 7 is a fourth example of message encoding according to the invention.

### (Detailed description of the invention)

In the following examples, the secure element SC is a SIM card. Alternatively, it may be any card or token comprising subscriber identity information and able to treat text messages according to SMS standard. The secure element SC may be either a removable device or a device welded into a telecom equipment. The secure element SC may be either a software component or a hardware component.

The invention relies on the fact that a text message may be split into plurality of sub-messages which may be coded with distinct character sets.

The invention allows optimizing the bandwidth when the preset character set is different from the default GSM alphabet.

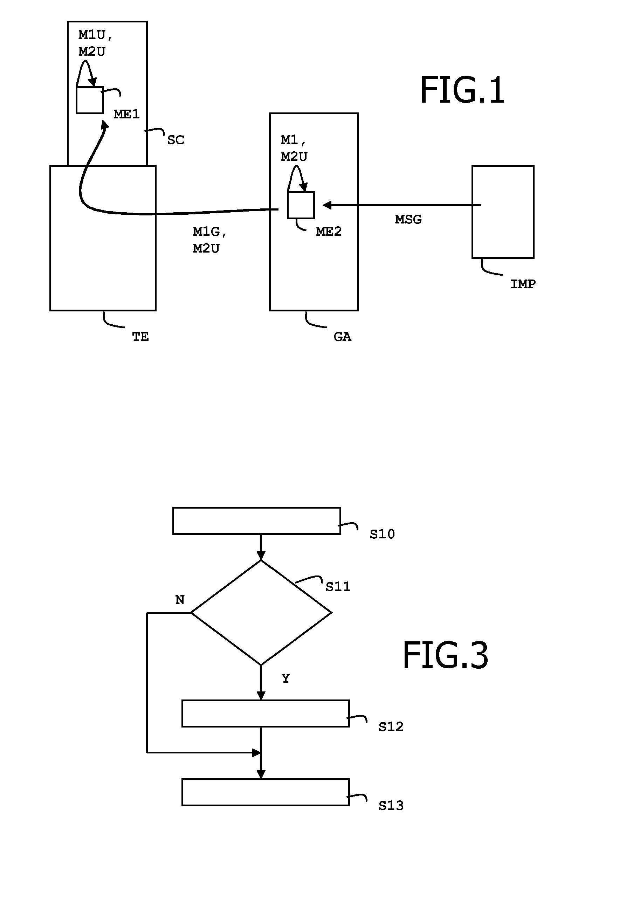

**Figure 1** shows an example of an instant messaging system comprising a server GA, an instant messaging provider IMP, a telecom equipment TE and a secure element SC.

In a preferred embodiment, the secure element SC is a SIM card and the telecom equipment TE is a mobile phone.

Alternatively, the telecom equipment TE may be any device able to communicate Over-The-Air (OTA) through a Mobile network like a personal computer, a tablet, a Personal Digital Assistant (PDA) equipped with communication means or a Machine-To-Machine (M2M) device.

The instant messaging provider IMP may be a server. The server GA may be a gateway which communicates with the server IMP through a wire network by using the Hypertext Transfer Protocol (HTTP).

The gateway GA communicates with the telecom equipment ET via a Short Message Service Center (SMSC) - not drawn at Fig. 1 - through a wire network by using the SMPP protocol. The SMSC is a machine that is able to send the SMS messages to the telecom equipment TE via OTA.

The server GA comprises a means ME2 which is capable of encoding text messages which target the secure element SC.

The secure element SC comprises a means ME1 which is capable of re-encoding text messages received from the server GA.

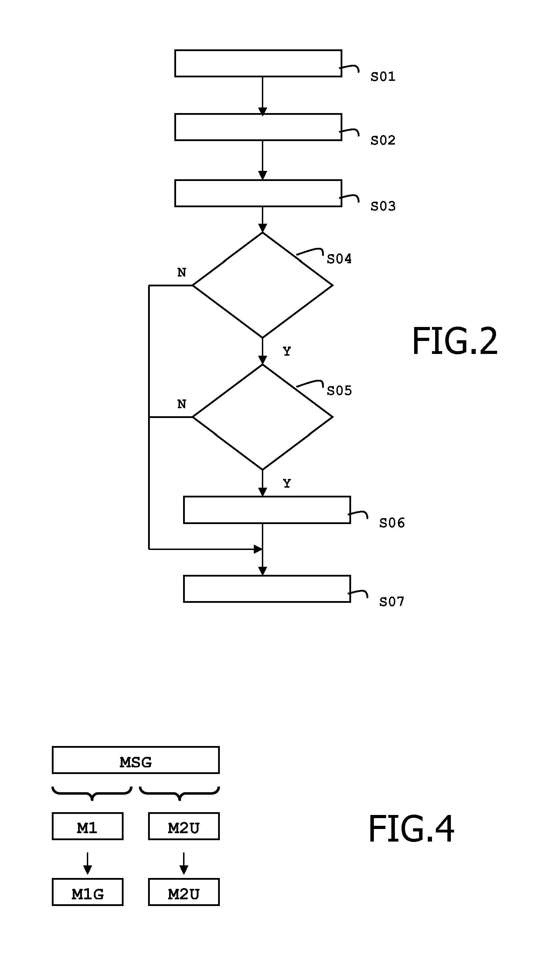

**Figure 2** shows a step sequence for managing the communication according to the invention.

At a first step S01, the gateway GA receives an identifier of a preset character set. The identifier is sent by the secure element SC. For example, the received identifier may correspond to the UCS-2 character set. The identifier may be coded on a single bit. Advantageously, the identifier is transmitted to the gateway GA when the user of the telecom equipment ET performs a sign-in operation. For instance, the identifier may be transported through the protocol ID field.

For example, an identifier bit of "0" denotes that 16-bit UCS-2 characters are requested while an identifier bit "1" denotes 8-bit characters are requested. When attached as the most significant bit to the protocol ID, the protocol ID would become either 02h or 82h, respectively.

Then at step S02, the instant messaging provider IMP sends an initial text message MSG to the gateway GA. The text message MSG is assumed to have been typed by another user connected to the same instant messaging framework. In a preferred embodiment, the text message MSG is sent to the server GA through Internet by using the HTTP protocol. For instance, the message MSG may contain "Hello word." This message M1 comprises 11 characters.

Then at step S03, the means ME2 of the server GA encodes the message MSG by using the preset character set corresponding to the identifier received at step S01. The means ME2 produces a text message M1 into the server GA by encoding whole or a first part of the message MSG thanks to the preset character set. In the example described above the identifier is related to UCS-2. Consequently, the text message M1 is built by the means ME2 by using the UCS-2 character set. Since UCS-2 requires two bytes for coding one character, the size of the text message M1 is 22 bytes. (=11 characters x 2 bytes.)

Then at step S04, the means ME2 checks if the used preset character set is UCS-2.

Then at step S05, the means ME2 checks if the text message M1 contains at least one character that is specific to the UCS-2 character set. (i.e. there is at least one character which cannot be coded with a character set using less than 16 bits) In a preferred embodiment, the means ME2 checks if all characters of the generated text message may be coded thanks to the default GSM character set.

In case of successful checking at steps S04 and S05, the means ME2 generates an optimized text message M1G by encoding the message M1 thanks to the default GSM character set. In the example described above the size of the text message M1 is 22 bytes, consequently, the size of the message M1G is 10 bytes. (= rounded 11 characters x 7 bits)

Then at steps S07, the message M1G is sent to the secure element SC via the SMS/OTA mechanism.

In case of unsuccessful checking at either step S04 or step S05, the text message M1 is sent to the secure element SC via the SMS/OTA mechanism at steps S07.

The above described process may be performed several times in order to treat all the parts of the initial message MSG or several initial messages received from an instant messaging provider IMP.

**Figure 3** shows a further step sequence for managing the communication according to the invention.

The step sequence of the Figure 3 takes place after the step S07 of the Figure 1.

At step S10, the secure element SC receives two text messages M1G and M2U which come from the server GA. In the example of figure 3, the message M1G is assumed to be encoded according to the default GSM character set and the message M2U is assumed to be encoded according to the UCS-2 character set.

Then at step S11, the means ME1 of the secure element SC checks if the two received messages M1G and M2U are encoded with different character sets.

At step S12, if the two messages M1G and M2U are not coded with the same character set, the means ME1 identifies the message encoded thanks to the default GSM character set as being a narrow message. In our example, the message M1G is identified as a narrow message. Then the means ME1 generates a message M1U by re-encoding the narrow message M1G into the UCS-2 character set. As a result, both messages M1U and M2U are available at secure element side. Both messages M1U and M2U are coded with the same character set (i.e. the UCS-2 character set.)

At step S13, the secure element SC may use and store the messages M1U and M2U.

**Figure 4** shows a first example of message encoding according to the invention.

In the examples of Figures 4 to 7, the server GA is assumed to use UCS-2 as preset character set. A large text MSG is assumed to have been provided by the Instant Messaging provider IMP.

In the example of Figure 4, the large text MSG may comprise 100 characters. This text message MSG is coded by the server GA into two messages M1 and M2U by using the UCS-2 character set. The message M1 has a size equal to 140 bytes and the second message M2U has a size equal to 60 bytes. The message M1 contains 70 characters and the second message M2U contains 30 characters.

In the example of Fig 4, the message M1 does not contain any character which is specific to the UCS-2 character set and the message M2U contains at least one character which is specific to the UCS-2 character set. Thanks to the method according to the invention the message M1 may be re-encoded by using the default GSM alphabet. By re-encoding the 70 characters of M1, the means ME2 generates a message M1G having a size equal to 62 bytes (i.e. 70 characters x 7 bits). The message M2U remains unchanged.

The sum of the size of the two messages M1G and M2U is 62+60=122 bytes. Thus the invention allows the server GA to send a payload of 122 bytes instead of 200 bytes.

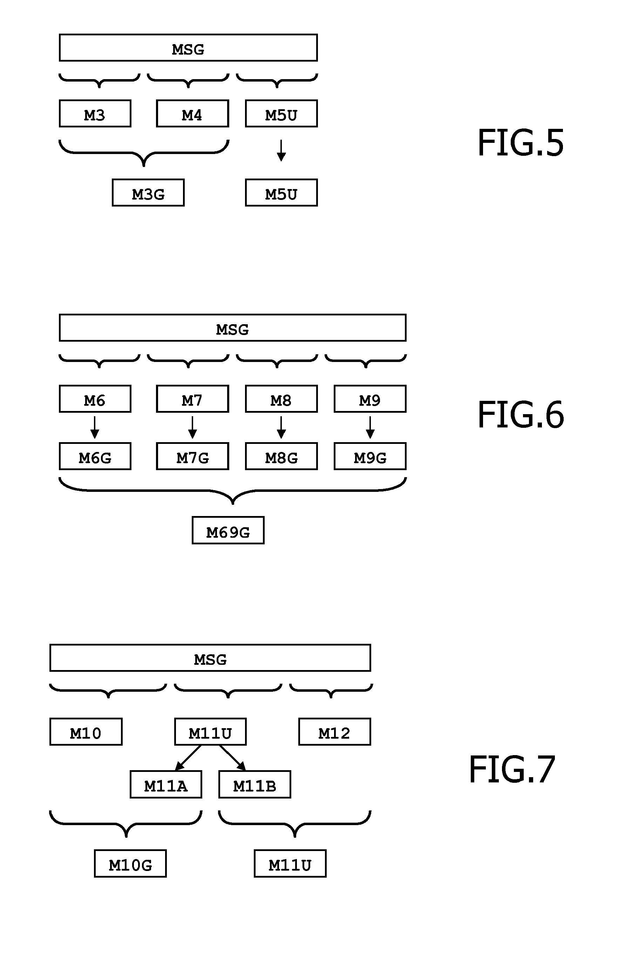

**Figure 5** shows a second example of message encoding according to the invention.

In this example, the large text MSG may comprise 150 characters. The message MSG is coded by the server GA into three messages M3, M4 and M5U by using the UCS-2 character set. The messages M3 and M4 have a size equal to 140 bytes and the third message M5U has a size equal to 20 bytes. Thus the message M3 contains 70 characters, the message M4 contains 70 characters and the third message M5U contains 10 characters.

In the example of Fig 5, the messages M3 and M4 do not contain any character which is specific to the UCS-2 character set and the message M5U contains at least one character which is specific to the UCS-2 character set. Thanks to the method according to the invention the two messages M3 and M4 may be re-encoded by using the default GSM alphabet. By merging M3 and M4 and by re-encoding the 140 characters of M3 and M4, the means ME2 generates a messages M3G having a size equal to 123 bytes (i.e. 140 characters x 7 bits). The message M5U remains unchanged.

The sum of the size of the two messages M3G and M5U is 123+20=143 bytes. Thus the invention allows the server GA to send a payload of 143 bytes instead of 300 bytes through SMS mechanism. Thanks to the invention, only two SMS messages (M3G & M5U) are sent between the server GA and the secure element SC instead of the three messages M3, M4 and M5U.

After the receipt of messages M3G and M5U into the secure element SC, the means ME1 re-encodes the message M3G by using the 16-bit character set (UCS-2) in order to have the whole text MSG coded into a single character set.

**Figure 6** shows a third example of message encoding according to the invention.

In this example, the large text MSG may comprise 280 characters. This message MSG is coded by the server GA into four messages M6, M7, M8 and M9 by using the UCS-2 character set. Each of the four messages M6 to M9 has a size equal to 140 bytes and contains 70 characters.

In the example of Fig 6, none of the messages M6 to M9 contain any character which is specific to the UCS-2 character set. Thanks to the method according to the invention the four messages M6 to M9 may be re-encoded by using a 8-bit character alphabet. The re-encoding operation generates four messages M6G, M7G, M8G and M9G. Advantageously, the four messages M6G to M9G may be merged in a single message M69G which has a size equal to 280 bytes (i.e. 280 characters x 8 bits).

Thus the invention allows the server GA to send a payload of 280 bytes instead of 560 bytes (i.e. 140 bytes x 4 messages) Thanks to the invention, only two SMS messages (i.e. M69G corresponds to two SMS having a payload equal to 140 byte each.) are sent between the server GA and the secure element SC instead of the four messages M6 to M9.

After the receipt of the message M69G, the secure element SC may keep the message M69G unchanged (i.e. without re-encoding operation) since the whole initial message MSG is coded into a single character set.

**Figure 7** shows a fourth example of message encoding according to the invention.

In this example, the large text message MSG may comprise 150 characters. This message MSG is coded by the server GA into three messages M10, M11U, and M12 by using the UCS-2 character set. The two messages M10 and M11U have a size equal to 140 bytes and contain 70 characters. The message M12 has a size equal to 20 bytes and contains 10 characters.

In the example of Fig 7, the messages M10 and M12 do not contain any character which is specific to the UCS-2 character set and the message M11U contains one character which is specific to the UCS-2 character set.

In this example, the message M11U may be shared into two messages M11A and M11B, where the message M11A contain no character specific to the UCS-2 character set. For instance, the message M11A may contain 50 characters and the message M11B may contain the remaining 20 characters. Thus the messages M10 and M11A may be merged then encoded by using a 8-bit character alphabet. This encoding operation generates a message M10G having a size equal to 120 bytes and containing 120 characters. In a similar way, the messages M11B and M12 may be merged into a message M11U which remains coded thanks to the UCS-2 character set. The message M11U has a size equal to 60 bytes and contains 30 characters.

The sum of the size of the two messages M10G and M11U is 120+60=180 bytes.

Thus the invention allows the server GA to send a payload of 180 bytes instead of 300 bytes (i.e. 140 +140 + 20 bytes.)

Advantageously, the selection of the 7-bit character set or 8-bit character set may be carried out according to either a predefined character set, the content of the message to be encoded, or a character set indicator provided by the secure element.

## Claims

1. A **method** for managing the communication between a server (GA) and a secure element (SC) connected to a telecom equipment (TE), the method comprising the steps of:
- providing the server (GA) with an identifier of a preset character set,
- providing the server (GA) with an initial text message (MSG),
- generating a first text message (M1) into the server (GA) by encoding a first part of the initial text message (MSG) thanks to the preset character set, **characterized in that** the method comprises the further steps of:
- if the preset character set is a 16-bit character alphabet, checking that the first text message (M1) does not contain any character specific to 16-bit character alphabet,
- in case of successful checking, generating an optimized text message (M1G) into the server (GA) by encoding the first text message (M1) thanks to a 7-bit character alphabet or thanks to a 8-bit character alphabet, and
- sending the optimized text message (M1G) to the secure element (SC).

2. A method according to claim 1, wherein the 7-bit character alphabet is the default GSM character set.

3. A method according to claim 1 or 2, wherein the method comprises the further steps of:
- receiving first and second messages (M1G, M2U) by said secure element (SC),
- checking if said first and second messages (M1G, M2U) are encoded thanks to different character sets,
- in case of successful checking, identifying a narrow message (M1G) encoded thanks to either a 7-bit character alphabet or a 8-bit character alphabet and re-encoding the narrow message (M1G) thanks to the 16-bit character alphabet.

4. A method according to claim 1, wherein the method comprises the steps of:
- generating a second text message into the server (GA) by encoding a second part of the initial text message (MSG) thanks to the preset character set,
- checking if said first and second messages are encoded thanks to a single character set,
- in case of successful checking, merging said first and second messages for generating a third message.

5. A method according to claim 1, wherein said server (GA) is an instant messaging gateway (GA), wherein the optimized text message (M1G) comprises a text related to instant messaging and wherein the optimized text message (M1G) complies with the SMS specifications.

6. A method according to claim 5, wherein the step of providing the server (GA) with an identifier of the preset character set is carried out during a sign-in operation.

7. A **secure element** (SC) intended to be connected to a telecom equipment (TE), said secure element (SC) being able to receive first and second messages (M1G, M2U) from a server (GA),
**characterized in that** said secure element (SC) comprises a means (ME1) able to check if said first and second messages (M1G, M2U) are encoded thanks to different character sets, able to identify a narrow message (M1G) encoded thanks to a 7-bit or 8-bit character alphabet and able to generate a new message by re-encoding the narrow message (M1G) thanks to a 16-bit character alphabet.

8. A secure element (CS) according to claim 7, wherein the 7-bit character alphabet is the default GSM character set.

9. A secure element (CS) according to claim 7 or 8, wherein said means (ME1) is able to check the size of the new message and able to split the new message into portions having a size lower than 71 bytes.

10. A **system** comprising a server (GA) and a secure element (SC) according to claim 7,
**characterized in that** said server (GA) comprises a second means (ME2) able to check that all characters of a text message are coded thanks to the default GSM character set and able to generate an optimized text message (M1G) by encoding the generated text message thanks to the default GSM character set.
